# EUROPEAN PATENT APPLICATION

(11) **EP 3 020 281 A2**
(43) Date of publication of application: **18.05.2016**
(21) Application number: 15187216.5
(22) Date of filing: 28.09.2015
(51) Int. Cl.: A21D 13/00, B65D 81/00

(54) **METHOD OF HEATING FOOD IN AN ACCELERATED COOKING OVEN AND FORMS**

(30) Priority: 29.09.2014 US 201462056763 P; 04.12.2014 US 201414560187; 21.04.2015 US 201562150357 P
(71) Applicant: West Carrollton Parchment & Converting, Inc., West Carrollton, OH 45449 (US)
(72) Inventor: LONERGAN, Cameron, West Carrollton City, OH Ohio 45449 (US)
(74) Representative: Findlay, Alice Rosemary

(57) **Abstract**

Food can be cooked in an accelerated cooking oven by placing the food on a heat-resistant liner and, in particular, a liner formed from vegetable parchment filled with an inert inorganic filler such as titanium dioxide. The parchment paper is coated on one or both sides with a silicone release coating. In one embodiment of the present invention, the parchment paper can be creped from about 5 to about 12%. This liner is suitable for use in an accelerated cooking oven to prevent messes from forming in the oven without significant discoloration, burning or flaking. The parchment can also be formed into containers or cups and used to cook items in an accelerated cooking oven.

## Description

Accelerated cooking ovens use a combination of impinged air and microwaves to very quickly cook or heat food items. These ovens are particularly useful for cooking or heating individual, smaller food items such as sandwiches, particularly in a sandwich shop or the like. Generally, these ovens heat items from room temperature to the desired eating temperature in one minute or less.

Any time one cooks something in an oven, splattering can occur and other messes can be created which require constant cleaning of the oven. To avoid this, small food items can be placed on a liner so as to prevent a mess from forming on the internal surface of the oven. Due to the high temperatures of these accelerated cooking ovens, normal liner material cannot be used. Thermoplastic liners would typically melt. Foil cannot be used because of the microwave portion of the oven. Typical paper products tend to char and fragment.

Thicker reusable materials, such as silicone rubber, glass or ceramic, could be employed, but these may slow down or impede the cooking and, further, they would require cleaning.

The present invention is premised on the realization that food items can be cooked in an accelerated cooking oven by placing the food item on a parchment material, in particular, a vegetable parchment filled with an inert inorganic filler which enables the parchment to resist the conditions of an accelerated cooking oven.

More particularly, the present invention provides a method of cooking food wherein the food rests in the oven on a sheet which comprises vegetable parchment having an inorganic filler in an amount effective to provide adequate heat resistance for the vegetable parchment in the accelerated cooking oven.

The vegetable parchment can include a nonstick coating on one or both surfaces. Using a creped vegetable parchment sheet further facilitates cooking of the food items.

Further, the invention includes a vegetable parchment sheet filled with an effective amount of an inorganic filler, such as titanium dioxide, and having at least one surface coated with a silicone nonstick surface.

One embodiment provides a method of cooking food wherein the food rests in the oven in a formed parchment container which comprises vegetable parchment having an inorganic filler in an amount effective to provide adequate heat resistance for the vegetable parchment in the accelerated cooking oven.

For example, the container can be a cup or a tray. These can be used to cook a single item in an accelerated cooking oven or multiple items simultaneously.

The invention will now be further described by way of example with reference to the accompanying drawings, in which:
FIG. 1 is a cross-sectional view broken away of the liner sheet used in the present invention;
FIG. 2 is a perspective view of a parchment cup according to the present invention;
FIG. 2A is a cross-sectional view taken at lines 1A-1A of FIG. 1; and
FIG. 3 is a perspective view of a parchment cup with an integral rim..

A cooking sheet 12, also referred to as a liner, which can be used in an accelerated cooking oven, includes a parchment layer 14, shown as a creped parchment layer, which includes one or both surfaces coated with a silicone release coating. As shown, the parchment layer includes two silicone release coating layers 16 on either planar surface.

The parchment 14 is a vegetable parchment which is a paper formed by subjecting cellulosic fibers to sulfuric acid, which forms an amyloid film on the exterior of the fibers. When the acid is washed off, the amyloid film hardens on the fibers and in the interstices of the paper. This increases the strength of the paper and enables it to be contacted with water without disintegration. Basically any vegetable parchment can be used in the present invention. These are formed with various types of cellulosic fibers, such as hardwood fibers and softwood fibers, as well as cotton fibers and the like.

The weight of the parchment can vary widely. Generally, the parchment, when used as a sheet, will have a weight of about 20 to 40 pounds per 3000 square feet, more typically 25 to 35 pounds, generally 27 pounds per 3,000 square foot ream (prior to creping).

Generally, the parchment, when used as a cooking container, will have a weight of about 27 to 100 pounds per 3000 square feet or more, more typically 45 to 65 pounds, generally 47 pounds per 3,000 square foot ream. This higher weight facilitates thermoforming. However, lower weight parchment can also be used.

The thickness of the parchment can also vary widely, generally from about 0.002" to about 0.003". If creped, which may be desired in some applications, the thickness of the paper will increase to 0.009" to 0.013". Vegetable parchment is available from a variety of different sources.

The parchment will further include an amount of a non-toxic inert, inorganic filler which can withstand the sulfuric acid reaction conditions in an amount effective to prevent the parchment from charring and, in particular, for 2 minutes at 500°F as described in the example below. Suitable fillers include metal oxides such as titanium oxide, zinc oxide, as well as others, as long as they can withstand the sulfuric acid treatment conditions.

The filler increases temperature resistance of the parchment required in the present invention. Generally, this can be from 10 to 40 kg per metric tonne (1000 kg of fiber). Generally this will be 30 to 40 kg with a loading of 40 kg, providing the maximum heat resistance.

The moisture content of the parchment is generally 5-7%, generally 5.5-6.5% and in particular 6.3% by weight.

The parchment paper can be smooth parchment paper or it can be creped if desired. Creping creates an undulating surface 18 which may improve heat flow and airflow around the item being cooked. Creping from 5 to 12%, and in particular about 9.5%, improves the browning of products using the sheet. For cooking liquid products such as eggs in parchment containers, creping is unnecessary

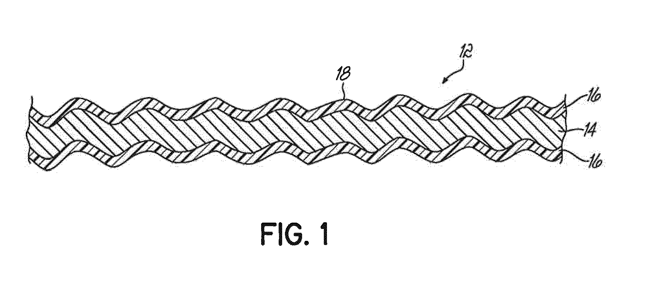

Further, at least one side of the sheet 12 may be coated with a silicone release coating 16. As shown in FIG. 1, preferably both sides of sheet 12 include coating 16. The thickness of the silicone coating should range from 0.1 to 0.3 lbs/3000 ft² ream on a dry basis. In particular, coating a first side with 0.123 lbs/3000 ft² and the second side with 0.148 lbs/3000 ft² works well. Only the inside of a parchment container need be coated. Such silicone coatings are commercially available and any food grade silicone coating which will adhere to the parchment can be used in the present invention. Generally, if the parchment is creped, the coatings 16 are generally applied prior to the creping.

A food item is cooked in an accelerated cooking oven by placing the food item on the sheet 12 in an accelerated cooking oven. Generally, these ovens operate with a combination of heated impinged air and microwaves. These ovens impinge a stream of hot gas at the center of the oven where the food item is positioned. These ovens operate at temperatures of 300°F to 500°F, but generally operate at a very short period of time, such as 20 to 30 seconds. Alternately, the food item may be wrapped in the liner, if desired. No tape or other binding agent is required. Simply the folding of the paper around the food product will keep it in position.

The sheet 12 was tested in an accelerated cooking oven. The sheet of vegetable parchment was 27 pounds per 3000 square-foot ream with 40 kg of titanium dioxide per metric tonne coated with a silicone release coating on both sides, creped 9.5% and had a moisture content of 0.3%. A TurboChef® oven was preheated to 500°F. A dry, unseeded, hard-crusted sandwich roll was wrapped in the sheet 12 which measured 11" x 13". The covered sandwich roll was placed in a silicone-covered mesh basket. No closures were used. The weight of the roll kept the parchment in place around the roll.

The door of the oven was opened and the silicone-covered mesh basket was placed in the oven directly on top of a cooking stone. The wrapped roll was cooked for two minutes at 500°F impinged air only. At the completion of the cooking time, the oven door was opened, the silicone-covered mesh basket was removed and placed on a stainless steel work surface.

The sheet was carefully inspected. It remained closed around the roll, where there was only the slightest amount of discoloration and no apparent physical damage to the sheet. The package was then opened. The parchment wrapping experienced the slightest amount of discoloration but absolutely no charring, flaking or damage to the sheet. The roll was removed from the parchment wrapping and there was no sticking or adhesion to the sheet. The roll was closely inspected: it was extremely hot, evenly crisp on the top, sides and bottom and with no burning.

This test was then repeated a second time with the same parchment sheet and using the same method. During the second phase, the parchment discolored slightly but there was no apparent burning or flaking and it retained its strength. The roll that was heated was extremely hot. The roll did not burn and the outside crusty layer became thicker and more brittle. Based on this testing, it was determined that the TiO₂ filled parchment sheet was suitable for use in accelerated cooking ovens.

Thus, unlike other known cooking sheets, the sheet described herein can withstand the high temperature conditions of an accelerated cooking oven without discoloring significantly, burning or flaking. Further, it is even suitable for reuse. This will facilitate the use of accelerated heat ovens, minimizing the need to clean out the surface of the oven between uses. It further will avoid the need for reusable containers that must be cleaned and are also expensive.

Although creping is not necessary, it provides several advantages. The creping provides a space or void between the food and the liner, as the food sits up on top of the peaks of the creping. This allows hot air to circulate around the food, allowing it to crisp up. The valleys in the creping further provide a space for liquid, in particular, oils to drain away from the food. This keeps the food dryer and keeps the oven clean. The creped material is also more dense. The density allows for absorption of more heat and also the more substantial sheet is easier to grab with the thumb and fingers to remove from the oven. Crepe material is also more rigid, allowing it to remain flat. It also provides more surface area per square inch, which should allow it to absorb and hold more moisture and heat per square inch than an uncreped sheet. Thus, although creping is not necessary, it does provide a superior method of cooking such food in an accelerated cooking oven.

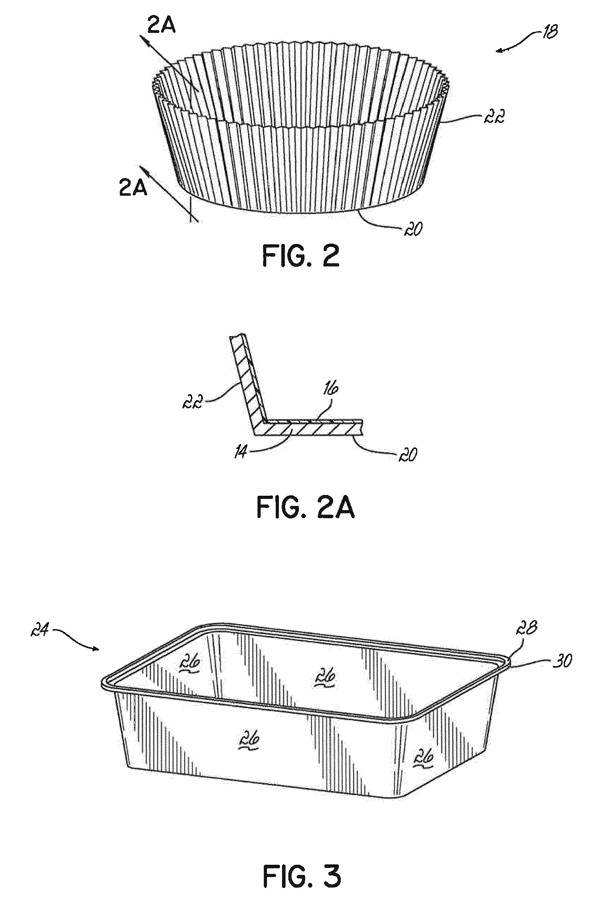

In the embodiment shown in FIGS. 2, 2A and 3, the parchment is formed into a container 18. The container 18 of the present invention includes a base 20 surrounded by a sidewall 22. The container 18 can be any desired shape, such as round, rectangular, oval or the like. The shape and size are primarily determined by the intended end use.

Likewise, the height of the sidewalls is also determined by intended end use. The volume of the container must be sufficient to hold any liquid within it during cooking, considering expansion and the like.

FIGS. 2, 2A, and 3 show two different embodiments of the present invention. FIG. 2 shows a round cup 18 with a fluted sidewall 22. FIG. 3 shows a rectangular container 24 with press-formed sidewalls 26 and further includes a ledge 28 and a rim 30, which provides added strength and allows a plastic cover (not shown) to snap fit over the container 24.

The containers shown in FIGS. 2, 2A and 3 are formed by thermoforming a parchment sheet. An apparatus suitable for forming the container shown in FIG. 3 is disclosed in U.S. published application US2014/0374472. Basically, the containers are formed solely of the vegetable parchment as previously described without any added structure or support. The parchment is formed solely from the material added in the furnish and the optional silicone coating on the inside surface of the containers.

The dimensions of containers 18 or 24 can vary widely. The end use and processing limitations dictate the maximum dimensions. The sidewalls will generally be 1" to 3" high. The base may have a diameter (or length for a non-round container) of up to 2.9 inches. The rimmed containers 24 as shown in FIG. 3 can be larger because of the added strength provided by the rim.

The containers can be used to cook or heat a wide variety of different products, including liquids such as eggs and the like. The food material which is to be cooked is simply placed in the container, which is then placed in accelerated cooking oven and heated at a temperature generally about 520°F, more likely 400-500°F , for a period of two minutes or less, generally one minute or less and generally at least about 10 seconds. The container does not discolor or char and does not alter the taste of the food. Exemplary items that can be heated or cooked using the containers of the present invention include eggs, biscuits from a dough or reheated, muffins from batter or reheated, sautéing vegetables, quiches, cheese sticks, sausages and other meat products as well as many other food products.

Thus, the sheets and containers described herein can be used to cook or heat a wide variety of different products. This provides a safe, efficient way to cook in an accelerated cooking oven.

## Claims

1. A method of cooking food comprising positioning said food on a sheet, wherein:
said sheet comprises a vegetable parchment sheet having an inert inorganic filler in an amount effective to provide heat resistance to the sheet at a temperature of 500°F for two minutes;
heating said food on said sheet in an accelerated cooking oven, wherein said sheet is contacted with flowing hot air for a time effective to heat the food to a desired temperature.

2. A method of cooking food comprising positioning said food on a container, wherein:
said container is formed from a vegetable parchment sheet having an inert inorganic filler in an amount effective to provide heat resistance to the sheet at a temperature of 500°F for two minutes;
heating said food in said container in an accelerated cooking oven, wherein said container is contacted with flowing hot air for a time effective to heat the food to a desired temperature.

3. The method claimed in either claim 1 or claim 2 wherein said sheet has a first silicone release layer on a first surface of said sheet.

4. The method claimed in claim 3 wherein said sheet has a second silicone release layer on a second surface of said sheet.

5. The method claimed in any of the preceding claims wherein said sheet is creped from about 5 to about 12%.

6. The method claimed in any of the preceding claims wherein said inert inorganic filler is titanium dioxide.

7. The method claimed in claim 6 wherein said effective amount is from about 10 to about 40 kg per metric tonne.

8. A sheet product effective to support food products while being heated in an accelerated heat oven, said sheet comprising:
vegetable parchment filled with at least 10 kg per metric tonne of titanium dioxide; and
first and second silicone coatings on first and second surfaces of said vegetable parchment.

9. The sheet claimed in claim 8 wherein said vegetable parchment sheet is creped from about 5 to about 12%.

10. In combination, a food item resting on the sheet claimed in claim 8.

11. A cooking container having a base and a sidewall surrounding said base, said sidewall and base formed from a sheet of vegetable parchment, said parchment having an inorganic filler in an amount effective to prevent charring of said parchment at a temperature of 500 °F for two minutes.

12. The container claimed in claim 11 wherein said effective amount is at least 10 kg per metric tonne.

13. The container claimed in claim 12 consisting of vegetable parchment and, optionally, a release coating.

14. A method of cooking a liquid comprising adding said liquid to said container claimed in claim 12 and placing said container in an accelerated cooking oven;
heating said liquid in said oven to a temperature greater than 400 °F for a time of ten seconds to less than two minutes.
